# FASCICULE DE BREVET EUROPEEN

(11) **EP 2 318 235 B1**
(45) Date de publication et mention de la délivrance du brevet: **29.02.2012**
(21) Numéro de dépôt: 09740441.2
(22) Date de dépôt: 06.08.2009
(51) Int. Cl.: B60R 13/02, B60Q 3/00, B60Q 3/02, B60Q 3/04, B60K 35/00

(54) **PANNEAU DE GARNISSAGE DE VEHICULE AUTOMOBILE COMPRENANT UN PICTOGRAMME ET UN MATERIAU DE TRANSMISISON DE LA LUMIERE**
KRAFTFAHRZEUGZIERBLECH MIT EINEM BILDZEICHEN UND EINEM LICHTDURCHLASSENDEN MATERIAL
AUTOMOBILE ORNAMENT PANEL INCLUDING AN ICON AND A LIGHT-TRANSMITTING MATERIAL

(30) Priorité: 29.08.2008 FR 0855818
(43) Date de publication de la demande: 11.05.2011
(73) Titulaire: Faurecia Interieur Industrie, 92000 Nanterre (FR)
(72) Inventeur: OEUVRARD, Jean-François, F-95300 Cergy Pontoise (FR); BEAU, Godefroy, F-92250 La Garenne Colombes (FR)
(74) Mandataire: Blot, Philippe Robert Emile
(86) Numéro de dépôt international: PCT/FR2009/051564
(87) Numéro de publication internationale: WO 2010/023391

(56) Documents cités:
- FR-A- 2 824 510
- FR-A- 2 872 953
- FR-A- 2 877 896
- FR-A- 2 911 555
- JP-A- 2001 191 845

## Description

La présente invention concerne un panneau de garnissage de véhicule automobile, du type comprenant au moins une zone formant pictogramme, ladite zone étant illuminée par une source de lumière disposée sous le panneau de garnissage, le panneau de garnissage comprenant une peau translucide formant la surface externe du panneau de garnissage et une couche de support disposée contre la peau, ladite couche de support comprenant une ouverture disposée au moins entre la source de lumière et la zone formant pictogramme. Un tel type de panneau de graissage est décrit dans le document FR-A1-2824-510.

L'invention concerne également un procédé de réalisation d'un tel panneau de garnissage, ainsi qu'un véhicule automobile comprenant un tel panneau.

Il est connu de prévoir des panneaux de garnissage du type susmentionné permettant d'afficher des pictogrammes directement sur la peau de ces panneaux, lesdits pictogrammes indiquant certaines fonctions ou certains états du véhicule. Par pictogramme, on entend tout dessin figuratif ou symbolique utilisé à des fins de communication, y compris des signes alphanumériques.

Dans de tels panneaux de garnissage, le pictogramme étant rétro-éclairé, la lumière traverse la couche de support du panneau et atteint la peau translucide par en dessous.

Le moindre défaut présent dans la couche de support sur le trajet de la lumière dégrade la qualité du pictogramme éclairé, du fait de la diffusion de la lumière par ce défaut dans la couche de support autour de la zone formant pictogramme. Le pictogramme devient flou et l'affichage est dégradé. De tels défauts sont par exemple la présence de bulles d'air ou de poussières dans le trajet de la lumière.

L'invention vise à pallier ces inconvénients en proposant un panneau de garnissage et un procédé de réalisation de ce panneau permettant d'éviter la présence de bulles et de poussières dans le trajet de la lumière afin d'obtenir un pictogramme rétro-éclairé de façon nette et une meilleure qualité d'affichage.

A cet effet, l'invention concerne un panneau de garnissage du type précité, dans lequel un matériau de transmission de la lumière est disposé dans au moins une partie de ladite ouverture, ledit matériau étant disposé dans un élément de support translucide disposé dans l'ouverture entre ledit matériau et ladite source de lumière.

La présence de l'élément de support sous le matériau de transmission de la lumière permet d'éviter le dépôt de poussières ou la formation de bulles entre la source de lumière et la zone formant pictogramme, notamment sur ou dans le matériau de transmission pendant la réalisation du panneau de garnissage. Ainsi, on obtient un panneau de garnissage dans lequel le trajet de la lumière n'est pas perturbé par des défauts de la couche de support, ce qui permet un affichage particulièrement net du pictogramme.

Selon d'autres caractéristiques du panneau de garnissage :
- l'élément de support présente une forme de coupelle ;
- l'élément de support est réalisé en matériau plastique transparent et lisse ;
- le matériau de transmission de la lumière est un gel de polyuréthane ou de silicone transparent ; et
- le matériau de transmission de la lumière remplit complètement l'ouverture entre l'élément de support et la peau translucide, ladite peau étant appliquée directement sur ledit matériau.

L'invention concerne également un procédé de réalisation d'un panneau de garnissage tel que décrit ci-dessus, le procédé comprenant les étapes suivantes :
- réaliser un ensemble élément de support / matériau de transmission de la lumière en coulant ledit matériau dans ledit élément de support ,
- disposer ledit ensemble contre la peau translucide en regard de la zone formant pictogramme,
- réaliser la couche de support autour dudit ensemble.

Selon d'autres caractéristiques du procédé :
- l'étape de réalisation de l'ensemble élément de support / matériau de transmission de la lumière comprend une étape de disposition d'un film sur la surface du matériau de transmission destinée à être en contact avec la peau translucide, ledit film protégeant ledit matériau et étant retiré préalablement à la disposition de l'ensemble contre la peau translucide ;
- l'étape de réalisation de l'ensemble élément de support / matériau de transmission comprend un étape de disposition d'un élément de protection contre la face de l'élément de support destinée à être disposée en regard de la source de lumière ; et

- l'étape de réalisation de la couche de support comprend une étape de moussage sur la peau autour de l'ensemble élément de support / matériau de transmission, la mousse étant ensuite percée en regard de l'ensemble jusqu'à l'élément de protection, celui-ci étant ensuite retiré de sorte à obtenir le panneau de garnissage.

L'invention concerne également un véhicule automobile comprenant un panneau de garnissage tel que décrit ci-dessus, dans lequel ledit panneau est appliqué contre au moins une partie de l'habitacle du véhicule.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'un panneau de garnissage selon l'invention,
- la Fig. 2 est une représentation schématique en coupe d'un ensemble élément de support / matériau de transmission de la lumière utilisé au cours du procédé de réalisation du panneau de garnissage selon l'invention.

Dans la description, on entend par « externe » ce qui est visible depuis l'habitacle du véhicule automobile et par « interne » ce qui n'est pas visible. Les termes « supérieur » et « inférieur » sont définis par rapport à une direction partant de la paroi de l'habitacle et allant vers l'intérieur de l'habitacle.

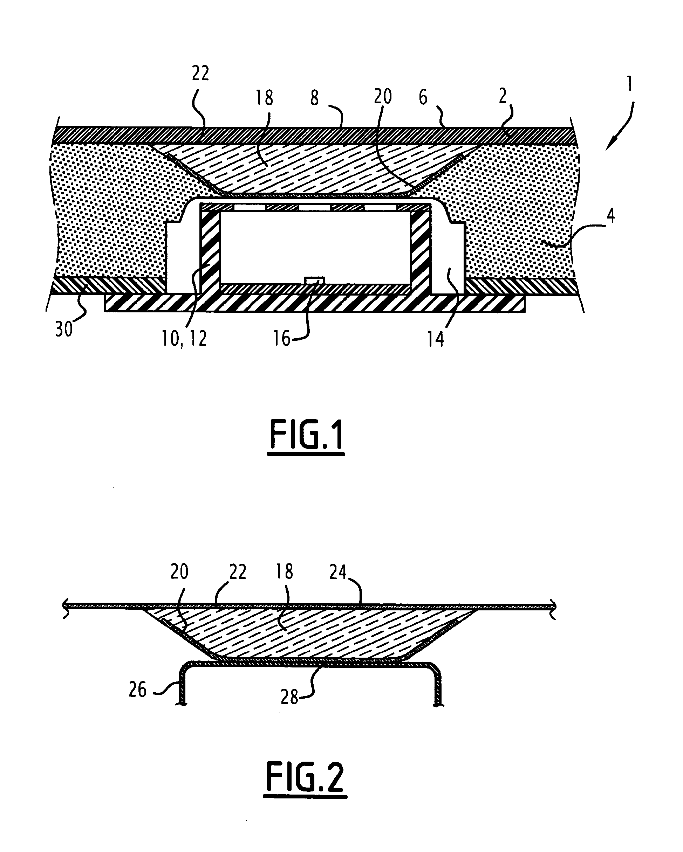

En référence à la Fig. 1, on décrit un panneau de garnissage 1 comprenant une peau souple 2 translucide, c'est-à-dire laissant passer la lumière, et une couche de support 4 sous et contre la peau translucide 2. La peau 2 forme la face externe 6, visible depuis l'habitacle du véhicule automobile, du panneau 1. La couche de support 4 est par exemple réalisée en mousse afin de conférer un toucher souple au panneau de garnissage 1. Cet ensemble peut être conformé de la façon souhaitée pour s'adapter au garnissage d'un véhicule automobile. La surface externe 6 formée par la peau 2 est par exemple sensiblement plane ou présente des zones en saillie ou en creux, par exemple pour signaler la présence de boutons de commande de fonctions du véhicule sous l'ensemble peau 2 / couche de support 4.

La panneau de garnissage 1 comprend au moins une zone 8 formant pictogramme permettant d'afficher des informations rétro-éclairées sur la face externe 6 de la peau translucide 2. A cet effet, une source de lumière 10 est disposée sous la peau translucide 2 en regard de la zone formant pictogramme 8. Cette source de lumière 10 est par exemple une boîte à lumière 12 disposée dans une ouverture 14 de la couche de support 4. L'ouverture traverse la couche de support 4 en regard de la zone formant pictogramme 8. La boîte à lumière 12 est connue en soi et comprend par exemple une diode électroluminescente 16 agencée pour émettre de la lumière vers la zone formant pictogramme 8.

Au dessus de la boîte à lumière 12, l'ouverture 14 est remplie par un matériau de transmission de la lumière 18, tel qu'un gel transparent de polyuréthane ou de silicone. Un tel gel ne modifie pas la lumière qui le traverse, c'est-à-dire qu'il ne dévie pas la lumière en provenance de la source de lumière 10. De plus, un tel gel est dépourvu de bulles d'air, au contraire de la mousse de la couche de support 4, ce qui empêche une diffusion de la lumière à l'intérieur de la couche de support 4 en dehors du trajet de la lumière entre la source de lumière 10 et la zone formant pictogramme 8.

Le gel 18 est disposé dans un élément de support 20 en forme de coupelle. Le gel 18 est coulé dans cet élément 20 et par la nature du gel qui remplit la coupelle, il n'y aucune formation de bulles ou de dépôt de poussières entre le gel 18 et l'élément de support 20. L'élément de support 20 est par exemple réalisé en matériau plastique transparent et lisse afin d'éviter de modifier le trajet de la lumière lorsque celle-ci atteint et traverse l'élément de support 20. A cet effet, l'élément de support 20 est par exemple poli afin d'obtenir la meilleure transmission de la lumière possible. Comme représenté sur la Fig. 1, l'élément de support 20 est interposé entre la source de lumière 10 et le gel 18.

L'ensemble formé par l'élément de support 20 et le gel 18 est agencé pour remplir complètement l'ouverture 24 au-dessus de la boîte à lumière 12. La surface 22 tournée vers l'extérieur du gel 18 est appliquée directement contre la face interne de la peau 2, ce qui évite également toute présence de bulles d'air ou de poussière entre le gel 18 et la peau 2.

Pour définir la forme du pictogramme, on prévoit un masque disposé dans le trajet de la lumière entre la source de lumière 10 et la zone formant pictogramme 8, comprenant des ouvertures laissant passer la lumière et des zones bloquant le passage de la lumière. Ce masque peut être un élément indépendant ou être imprimé sur un des éléments du panneau de garnissage.

Le panneau de garnissage décrit ci-dessus permet d'obtenir un pictogramme rétro-éclairé de façon nette. En effet, du fait des matériaux utilisés, gel sans bulle, élément de support transparent et lisse, et de l'agencement du panneau de garnissage, la lumière provenant de la source de lumière traverse la couche de support 4 sans être déviée ou diffusée par des défauts, tels que des bulles d'air, de la poussière ou une irrégularité des matériaux.

Le procédé de réalisation du panneau de garnissage décrit ci-dessus va à présent être décrit.

Au cours d'une première étape, on prépare un ensemble élément de support 20 / matériau de transmission de la lumière 18. Le gel 18 est coulé dans la coupelle de l'élément de support 20. Afin de protéger le gel 18 pendant le transport, le stockage et/ou la manipulation de cet ensemble, un film 24 est appliquée sur la surface 22 du matériau de transmission 18 destinée à être en contact avec la peau translucide 2. Un tel film 24 est par exemple réalisé en polyéthylène. Il permet d'empêcher le dépôt de poussière sur la surface 24 du gel 18 et de prévenir le séchage de celui-ci, ce qui pourrait favoriser l'apparition d'une croûte sur la surface 24.

Un élément de protection 26 est également disposé contre la face 28 de l'élément de support 20 destinée à être disposée en regard de la source de lumière 10, comme représenté sur la Fig. 2. Un tel élément de protection 26 est par exemple un film appliqué contre la face 28. Ce film permet de protéger la face 28, destinée à être traversée par la lumière et d'éviter tout dépôt de poussière contre cette face 28. Le film permet également de protéger l'élément de support 20 contre la mousse, comme cela sera décrit ultérieurement.

Au cours d'une deuxième étape, le film 24 est retiré de la surface 22 du gel 18 et l'ensemble élément de support 20 / matériau de transmission 18 est appliqué contre la peau 2 en regard de la zone formant pictogramme. Le gel 18, lorsque le film 24 est retiré, est très collant et adhère à la peau. Du fait de sa souplesse, la peau 2 est déroulée sur la surface 22, ce qui permet d'éviter d'emprisonner des bulles entre la peau 2 et la surface 22.

La peau 2 et l'ensemble élément de support 20 / matériau de transmission 18 sont ensuite disposés dans une cavité de moulage afin de réaliser la couche de support 4. A cet effet, un matériau précurseur de mousse est par exemple injecté dans la cavité de moulage et la couche de support 4 se forme sous la peau 2 autour de l'ensemble élément de support 20 / matériau de transmission 18 lors de l'expansion de la mousse.

Après l'expansion de la mousse, l'ouverture 14 de réception de la source de lumière est réalisée en regard de l'ensemble élément de support 20 / matériau de transmission 18. Cette ouverture est par exemple réalisée par fraisage de la mousse jusqu'au film de protection 26 de la face 28 de l'élément de support 20. Le film protège l'élément de support 20 et évite que la mousse adhère contre la face 28 de cet élément. Le film 26 est ensuite retiré. Ce film est par exemple agencé pour ne pas adhérer à la mousse, ce qui permet de faciliter son retrait. De plus, il peut être plié à ses parties extrêmes, comme représenté sur la Fig. 2 afin de faciliter encore son retrait.

D'autres opérations peuvent être prévues, telles que la disposition d'un insert rigide de support 30 contre la face interne de la couche de support 4, comme représenté sur la Fig. 1.

On obtient ainsi un panneau de garnissage 1 exempt de défaut en regard de la zone formant pictogramme 8, ce qui permet d'obtenir un pictogramme rétro-éclairé de façon nette et un affichage optimal sur la peau 2.

Un tel panneau de garnissage 1 peut être utilisé par exemple pour revêtir la planche de bord d'un véhicule automobile ou tout autre partie de l'habitacle dans laquelle l'affichage d'informations est nécessaire.

## Revendications

1. Panneau de garnissage (1) pour véhicule automobile, du type comprenant au moins une zone formant pictogramme (8), ladite zone (8) étant illuminée par une source de lumière (10) disposée sous le panneau de garnissage, le panneau de garnissage (1) comprenant une peau translucide (2) formant la surface externe (6) du panneau de garnissage et une couche de support (4) disposée contre la peau (2), ladite couche de support (4) comprenant une ouverture (14) disposée au moins entre la source de lumière (10) et la zone formant pictogramme (8), **caractérisé en ce qu'**un matériau de transmission de la lumière (18) est disposé dans au moins une partie de ladite ouverture (14), ledit matériau (18) étant disposé dans un élément de support (20) translucide disposé dans l'ouverture (14) entre ledit matériau (18) et ladite source de lumière (10).

2. Panneau de garnissage selon la revendication 1, **caractérisé en ce que** l'élément de support (20) présente une forme de coupelle.

3. Panneau de garnissage selon la revendication 1 ou 2, **caractérisé en ce que** l'élément de support (20) est réalisé en matériau plastique transparent et lisse.

4. Panneau de garnissage selon l'une quelconque des revendications 1 à 3, **caractérisé en ce que** le matériau de transmission de la lumière (18) est un gel de polyuréthane ou de silicone transparent.

5. Panneau de garnissage selon l'une quelconque des revendications 1 à 4, **caractérisé en ce que** le matériau de transmission de la lumière (18) remplit complètement l'ouverture (14) entre l'élément de support (20) et la peau translucide (2), ladite peau (2) étant appliquée directement sur ledit matériau (18).

6. Procédé de réalisation d'un panneau de garnissage selon l'une quelconque des revendications 1 à 5, **caractérisé en ce qu'**il comprend les étapes suivantes :
- réaliser un ensemble élément de support (20) / matériau de transmission de la lumière (18) en coulant ledit matériau (18) dans ledit élément de support (20),
- disposer ledit ensemble contre la peau translucide (2) en regard de la zone formant pictogramme (18),
- réaliser la couche de support (4) autour dudit ensemble.

7. Procédé de réalisation selon la revendication 6, **caractérisé en ce que** l'étape de réalisation de l'ensemble élément de support (20) / matériau de transmission de la lumière (18) comprend une étape de disposition d'un film (24) sur la surface (22) du matériau de transmission (18) destinée à être en contact avec la peau translucide (2), ledit film (24) protégeant ledit matériau (18) et étant retiré préalablement à la disposition de l'ensemble contre la peau translucide (2).

8. Procédé de réalisation selon la revendication 6 ou 7, **caractérisé en ce que** l'étape de réalisation de l'ensemble élément de support (20) / matériau de transmission (18) comprend un étape de disposition d'un élément de protection (26) contre la face (28) de l'élément de support (20) destinée à être disposée en regard de la source de lumière (10).

9. Procédé de réalisation selon la revendication 8, **caractérisé en ce que** l'étape de réalisation de la couche de support (4) comprend une étape de moussage sur la peau (2) autour de l'ensemble élément de support (20) / matériau de transmission (18), la mousse étant ensuite percée en regard de l'ensemble jusqu'à l'élément de protection (26), celui-ci étant ensuite retiré de sorte à obtenir le panneau de garnissage (1).

10. Véhicule automobile comprenant un panneau de garnissage (1) selon l'une quelconque des revendications 1 à 5, ledit panneau étant appliqué contre au moins une partie de l'habitacle du véhicule.

## Claims

1. A trim panel (1) for a motor vehicle, of the type comprising at least one pictogram area (8), said area (8) being illuminated by a light source (10) arranged under the trim panel, the trim panel (1) including a translucent skin (2) forming the outer surface (6) of the trim panel and a substrate layer (4) arranged against the skin (2), said substrate layer (4) including an opening (14) arranged at least between the light source (10) and the pictogram area (8), **characterized in that** a fight-transmitting material (18) is arranged in at least part of said opening (14), said material (18) being arranged in a translucent substrate member (20) arranged in the opening (14) between said material (18) and said light source (10).

2. The trim panel according to claim 1, **characterized in that** the substrate member (20) is bowl shaped.

3. The trim panel according to claim 1 or 2, **characterized in that** the substrate member (20) is made from a smooth transparent material.

4. The trim panel according to any one of claims 1 to 3, **characterized in that** the light-transmitting material (18) is a transparent polyurethane or silicone gel.

5. The trim panel according to any one of claims 1 to 4, **characterized in that** the light-transmitting material (18) completely fills the opening (14) between the substrate element (20) and the translucent skin (2), said skin (2) being applied directly on said material (18).

6. A method for making a trim panel according to any one of claims 1 to 5, **characterized in that** it comprises the following steps:
- making a substrate member (20) / light-transmitting material (18) assembly by pouring said material (18) in said substrate member (20),
- arranging said assembly against the translucent skin (2) opposite the pictogram area (8),
- making the substrate layer (4) around said assembly.

7. The production method according to claim 6, **characterized in that** the step for making the substrate member (20) / light-transmitting material assembly (18) comprises a step of depositing a film (24) on the surface (22) of the transmitting material (18) intended to be in contact with the translucent skin (2), said film (24) protecting said material (18) and being removed before arranging the assembly against the translucent skin (2).

8. The production method according to claim 6 or 7, **characterized in that** the step of making the substrate member (20) / transmitting material assemble (18) comprises a step of arranging a protective member (26) against the face (28) of the substrate member (20) intended to be positioned opposite the light source (10).

9. The production method according to claim 8, **characterized in that** the step of making the substrate layed (4) comprises a foaming step on the skin (2) around the substrate member (20) / transmitting member assembly (18), the foam then being pierced opposite the assembly up to the protective member (26), the protective member then being removed so as to obtain the trim panel (1).

10. A motor vehicle comprising a trim panel (1) according to any one of claims 1 to 5, said panel being applied against at least one portion of the cab of the vehicle.

## Patentansprüche

1. Verkleidungspaneel (1) für ein Kraftfahrzeug, das mindestens eine ein Piktogramm bildende Zone (8) umfasst, wobei die Zone (8) von einer unter dem Verkleidungspaneel angeordneten Lichtquelle (10) beleuchtet wird, wobei das Verkleidungspaneel (1) eine transluzide Haut (2), die die Außenfläche (6) des Verkieidungspaneels bildet, und eine Trägerschicht (4), die an der Haut (2) angeordnet ist, umfasst, wobei die Trägerschicht (4) eine Öffnung (14) aufweist, die mindestens zwischen der Lichtquelle (10) und der ein Piktogramm bildenden Zone (8) angeordnet ist, **dadurch gekennzeichnet, dass** ein Licht transmittierendes Material (18) in mindestens einem Teil der Öffnung (14) angeordnet ist, wobei das Material (18) in einem transluziden Trägerelement (20) angeordnet ist, das in der Öffnung (14) wischen dem Material (18) und der Lichtquelle (10) angeordnet ist.

2. Verkleidungspaneel nach Anspruch 1, **dadurch gekennzeichnet, dass** das Trägerelement (20) eine Schalenform aufweist.

3. Verkleidungspaneel nach Anspruch 1 oder 2, dadurch gekennzeichet, dass das Trägerelement (20) aus einem transparenten und glatten Kunststoff hergestellt ist.

4. Verkleidungspaneel nach einem beliebigen der Ansprüche 1 bis 3, dadurch gekenntzeichnet, dass das Licht transmittierende Material (18) ein transparentes Polyurethan- oder Silikongel ist.

5. Verkleidungspaneel nach einem beliebigen der Ansprüche 1 bis 4, **dadurch gekennzeichnet, dass** das Licht transmittierende Material (18) vollständig die Öffnung (14) zwischen dem Trägerelement (20) und der transluziden Haut (2) ausfüllt, wobei die Haut (2) direkt auf das Material (18) aufgebracht ist.

6. Verfahren zur Herstellung eines Verkleidungspaneels nach einem beliebigen der Ansprüche 1 bis 5, **dadurch gekennzeichnet, dass** es die folgenden Schritte umfasst:
- Herstellen einer Einheit Trägerelement (20)/Licht transmittterendes Material (18), indem das Material (18) in das Trägerelement (20) gegossen wird,
- Anordnen der Einheit gegen die transluzide Haut (2) gegenüberliegend zur ein Piktogramm bildenden Zone (8),
- Herstellen der Trägerschicht (4) um die Anordnung herum.

7. Verfahren nach Anspruch 6, **dadurch gekennzeichnet, dass** der Schritt der Herstellung der Einheit Trägerelement (20)/Licht transmittierendes Material (18) einen Schritt der Anordnung einer Folie (24) auf der Fläche (22) des transmittiererden Materials (18) umfasst, die vorgesehen ist, in Kontakt mit der transluziden Haut (2) zu kommen, wobei die Folie (24) das Material (18) schützt und vor der Anordnung der Einheit an der transluziden Haut (2) angezogen wird.

8. Verfahren nach Anspruch 6 oder 7, dadurch gelkennzeichnen, dass der Schritt der Herstellung der Einheit Trägerelement (20)/transmittierendes Material (18) einen Schritt der Anordnung eines Schutzelements (26) an der Fläche (28) des Trägerelemenrs (20) umfasst, die dazu dient, in Gegenüberstellung zu der Lichtquelle (10) angeordnet zu werden,

9. Verfahren nach Anspruch 8, **dadurch gekennzeichnet, dass** der Schritt der Herstellung der Trägerschicht (4) einen Schritt des Aufschäumens auf die Haut (2) um die Einheit Trägerelement (20)/transmittierendes Material (18) herum umfasst, wobei der Schaum anschließens gegenüberliegend zur Einheit bis zum Schutzelement (26) durchstoßen wird, das dann abgezogen wird, um das Verkleidungspaneel (1) zu verhalten.

10. Kraftfahrzeug, das ein Verkleidungspaneel (1) nach einem beliebigen der Ansprüche 1 bis 5 umfasst, wobei das Paneel gegen mindestens ein Teil der Fahrgastzelle des Fahrzeugs aufgebracht wird.
